# FASCICULE DE BREVET EUROPEEN

(11) **EP 0 727 071 B1**
(45) Date de publication et mention de la délivrance du brevet: **28.01.1998**
(21) Numéro de dépôt: 95900187.6
(22) Date de dépôt: 03.11.1994
(51) Int. Cl.: G06F 17/30

(54) **SYSTEME DE CONTROLE D'UNE BASE DE DONNEES RELATIONNELLE SELON UNE LOGIQUE D'ACCES ORIENTEE OBJET LIMITANT LE NOMBRE DES ACCES A LADITE BASE DE DONNEES, ET PROCEDE CORRESPONDANT**
STEUERSYSTEM EINER RELATIONELLEN DATENBANK GEMÄSS EINER OBJEKT-ORIENTIERTEN LOGIK, DIE DIE ZUGRIFFE AUF DIE DATENBANK VERRINGERT, UND ENTSPRECHENDES VERFAHREN
RELATIONAL DATA BASE CONTROL SYSTEM USING OBJECT-ORIENTED ACCESS LOGIC TO LIMIT THE DATA BASE ACCESS COUNT, AND METHOD THEREFOR

(30) Priorité: 05.11.1993 FR 9313488
(43) Date de publication de la demande: 21.08.1996
(73) Titulaire: SOCS HOLDING, F-75010 Paris (FR)
(72) Inventeur: MIGINIAC, Jean-Charles, F-77340 Pontault-Combault (FR); PLANARD, Michel, F-91230 Montgéron (FR)
(74) Mandataire: Vidon, Patrice
(86) Numéro de dépôt international: FR9401274
(87) Numéro de publication internationale: WO9512855

(56) Documents cités:
- COMPUTER AIDED DESIGN, vol.22, no.8, Octobre 1990, LONDON GB pages 458 - 468 T. BARSALOU & G. WIEDERHOLD : 'Complex objects for relational databases'
- COMPUTER, vol.19, no.12, Décembre 1986, LONG BEACH US pages 37 - 44 GIO WIEDERHOLD : 'Views, Objects, and Databases'
- 12TH ANNUAL INTERNATIONAL PHOENIX CONFERENCE ON COMPUTERS AND COMMUNICATIONS, 23 Mars 1993, TEMPE, ARIZONA pages 203 - 209 A. SHAH ET AL : 'Renovation of complex objects in the temporal object system'

## Description

Le domaine de l'invention est celui de la conception, du développement et de l'exploitation de systèmes informatiques. Plus précisément, l'invention concerne le contrôle, c'est-à-dire notamment la consultation et la mise à jour de bases de données relationnelles.

On connaît de nombreux systèmes de gestion de bases de données. De façon générale, ils reposent sur une approche plane, relationnelle, de la mémoire de stockage. Celle-ci est divisée en tables, fiches puis champs de données. La mise en oeuvre de ces systèmes est complexe et difficile à appréhender, que ce soit pour les développeurs d'applications ou pour les utilisateurs finaux. Elle suppose notamment une bonne connaissance de la structure de la base de données d'une part, et des commandes, ou requêtes, utilisables d'autre part.

Plusieurs outils ont été proposés pour simplifier l'utilisation des ces bases de données relationnelles. Ainsi, il existe des langages de haut niveau, des compilateurs, des générateurs de codes, des interfaces homme/machine... Cependant, dans tous les cas, il ne s'agit que d'une couche intermédiaire ajoutée entre l'utilisateur et la base de données. Il reste nécessaire de connaître la structure de la base de données, et en particulier les relations définies entre ces données.

Par ailleurs, dans les systèmes de gestion de base de données classiques, le nombre d'accès à la base de données en lecture ou en écriture est très élevé. Chaque consultation et chaque modification se traduit par un accès aux moyens de stockage de la base de données. Cela présente de nombreux inconvénients, et en particulier l'augmentation des temps de traitement (les temps d'accès pouvant être très longs, notamment si la base de données est distante), l'augmentation des coûts de traitement (si l'accès à la base de données est payant et/ou si l'accès se fait par l'intermédiaire d'un réseau payant), l'usure des moyens de stockage...

L'invention a notamment pour objectif de pallier ces inconvénients des techniques antérieures.

Plus précisément, un premier objectif de l'invention est de fournir un système de contrôle d'une base de données relationnelles permettant de limiter le nombre d'accès à cette base de données. En autres termes, l'invention a pour objectif de fournir un tel système nécessitant, pour une application donnée, un nombre d'accès à la base de données très inférieur à celui nécessaire avec les systèmes connus.

Le document "complex objects for relational databases" (T. Barsalou et G. Wiederhold - Computer Aided Design, vol. 22, n° 8, octobre 1990, LONDON, GB pp. 458-468) décrit ainsi un système selon lequel une base de données peut être consultée soit de façon classique relationnelle, soit selon une approche orientée objet. Cette technique suppose cependant que l'utilisateur connaisse et maîtrise la structure de la base de donnés relationnelle.

Le document "View, Objects and Databases" (G. Wierderhold - Computer, vol. 19, n° 12, décembre 1986, LONG BEACH, US, pp. 37-44) décrit un système sensiblement similaire.

Un autre objectif de l'invention est de fournir un tel système, permettant de s'affranchir totalement de la connaissance de la structure de la base de données et des relations définies entre les données.

L'invention a encore pour objectif de fournir un tel système permettant de gérer aisément les données dans le temps, autorisant notamment des consultations à des dates passées ou futures simulées et des modifications rétroactives. Par ailleurs, un objectif complémentaire de l'invention est de permettre l'interaction sur l'ensemble des données d'une telle modification rétroactive.

Une technique de gestion d'historique est déjà connue, du document "Renovation of complex objects in the temporal object system" (A. Shah et al. - 12th Annual International Phoenix Conference on Computers and Communications, 23 mars 1993, Tempe, Arizona, pp. 203-209). Elle est basée sur la notion de famille d'objets, tous les états précédents de chaque objet étant intégralement mémorisée. Cette technique ne permet que des remontées dans le passé, et génère un encombrement mémoire important.

L'invention est définie dans les revendications 1 et 5.

Ainsi, le contrôle de la base de données est très simplifié. Il n'est pas nécessaire de connaître la structure de la base, ni, à fortiori, les commandes d'accès à cette base de données. En effet, l'utilisateur ne manipule que des objets, selon une approche généralement dite "orientée objet". Le système de l'invention assure lui-même de façon automatique et transparente, le transfert et le transcodage entre les objets et les fiches correspondantes.

Par ailleurs, selon l'invention, les stockages des objets et des fiches sont complètement dissociés. Les objets sont stockés dans des seconds moyens de stockage temporaire, et les fiches dans des premiers moyens de stockage de la base de données. L'utilisateur a accès uniquement aux seconds moyens de stockage comprenant les objets.

Le système comprend donc des moyens de transfert de données entre les premiers et les seconds moyens de stockage, qui reconstruisent les objets, à partir des fiches stockées dans la base de données et de la structure de la classe de l'objet correspondant, puis stockent ces objets reconstruits dans les moyens de stockage temporaires. Inversement, les moyens de transfert assurent le transcodage des objets modifiés en fiches à stocker dans les premiers moyens de stockage.

Ces opérations de transfert, ou de transcodage, sont totalement transparentes pour l'utilisateur. Celui-ci travaille sur les objets contenus dans les seconds moyens de stockage. Ainsi, le nombre d'accès à la base de données est limité.

En particulier, le système de l'invention peut gérer des séquences de travail, appelées événements, et en ce que lesdits moyens de génération automatique de commandes émettant une commande de transfert de données desdits seconds moyens de stockage vers lesdits premiers moyens de stockage uniquement lorsqu'un événement est terminé. De cette façon, plusieurs modifications peuvent être faites sur un objet durant un événement, mais il n'y aura qu'une seule opération d'écriture dans la base de données, à la fin de l'événement.

Avantageusement, lesdits moyens de contrôle comprennent des moyens de gestion de verrous interdisant la modification d'une fiche de ladite base de données, lorsqu'un objet associé à ladite fiche est stocké dans lesdits seconds moyens de stockage et a été modifié par lesdits moyens de consultation et de modification.

Par ailleurs, dans un mode de réalisation préférentiel de l'invention, ledit système comprend des moyens de gestion d'un historique d'au moins certains desdits objets, associant à au moins une variable desdits objets au moins deux valeurs distinctes, chacune desdites valeurs étant associée à au moins un champ technique portant une date représentative de la validité de ladite valeur.

Ainsi, la consultation des données n'est plus plane. Il est possible de positionner fictivement une consultation à tout instant dans le temps (dans le passé ou dans le futur). Par ailleurs, il est possible d'effectuer rétroactivement des modifications, qui peuvent prendre date à un instant choisi dans le passé.

De façon avantageuse, au moins certaines desdites valeurs sont associées à deux champs techniques, un champ de date de connaissance, représentatif de la date à laquelle ladite valeur a été connue, et un champ de date d'effet, représentatif de la date à laquelle ladite valeur est devenue effective.

En effet, dans de nombreuses applications il est important de connaître et de distinguer la date de connaissance et la date d'effet, notamment dans des applications de gestion.

Préférentiellement, lesdits moyens de génération automatique de commandes comprennent une mémoire-cache stockant une série de commandes préalablement générées. De cette façon, la réalisation des commandes est simplifiée.

L'invention concerne également un procédé de contrôle d'une base de données relationnelle, correspondant au système décrit ci-dessus. Ce procédé comprend notamment une étape de chargement d'au moins un objet dans des seconds moyens de stockage temporaire, comprenant les étapes de :
- lecture dans lesdits premiers moyens de stockage d'une fiche correspondant à un desdits objets ;
- premier transcodage de ladite fiche vers ledit objet, en fonction de la structure de la classe dudit objet, au moins certaines variables dudit objet correspondant à au moins certains desdits champs de données de ladite fiche;
- écriture dudit objet dans lesdits seconds moyens de stockage temporaire

La sauvegarde dans les premiers moyens de stockage est réalisée de façon symétrique.

De façon avantageuse, au moins certains desdits objets comprennent :
- au moins une variable stockée, correspondant à un champ de données de la fiche associée audit objet ; et
- au moins une variable déductive, dont la valeur est déterminée lors de ladite première étape de transcodage, à partir de la valeur d'au moins un champ de données de la fiche associée audit objet et/ou de la structure de la classe dudit objet.

Préférentiellement, de façon à limiter les accès à la base de données relationnelle, une recherche d'au moins un objet répondant à une condition prédéterminée est effectuée en deux temps :
- un premier temps correspondant à une recherche parmi les objets stockés dans lesdits seconds moyens de stockage ; et
- si la recherche n'est pas terminée, un second temps correspondant à une recherche parmi les fiches stockées dans lesdits premiers moyens de stockage.

D'autres caractéristiques et avantages de l'invention apparaîtront à la lecture de la description suivante d'un mode de réalisation préférentiel de celle-ci, donné à titre illustratif et non limitatif, et des dessins annexés, dans lesquels :
- la figure 1 est un schéma synoptique illustrant la structure générale du système de l'invention ;
- la figure 2 illustre de façon schématique les liens entre une classe d'objets et une table de la base de données dans le système de la figure 1 ;
- la figure 3 présente, sous la forme d'un organigramme simplifié, le procédé de l'invention ;
- la figure 4 illustre le principe de la gestion chronologique des objets de l'invention.

L'invention concerne donc un système de contrôle d'une base de données relationnelle mettant en ouvre une conception orientée-objet. En d'autres termes, le système de l'invention établit de façon automatique et transparente un pont entre les bases de données relationnelles et l'univers des objets. Ainsi :
- un utilisateur manipule les données uniquement sous la forme d'objets ;
- les données sont stockées dans une base de données relationnelles classiques.

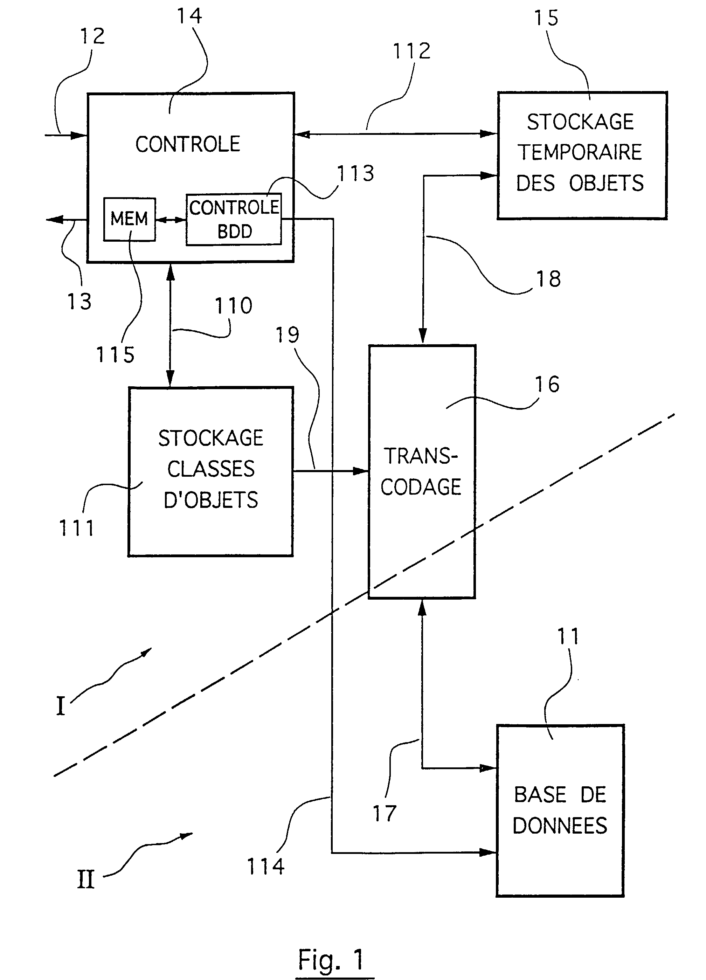

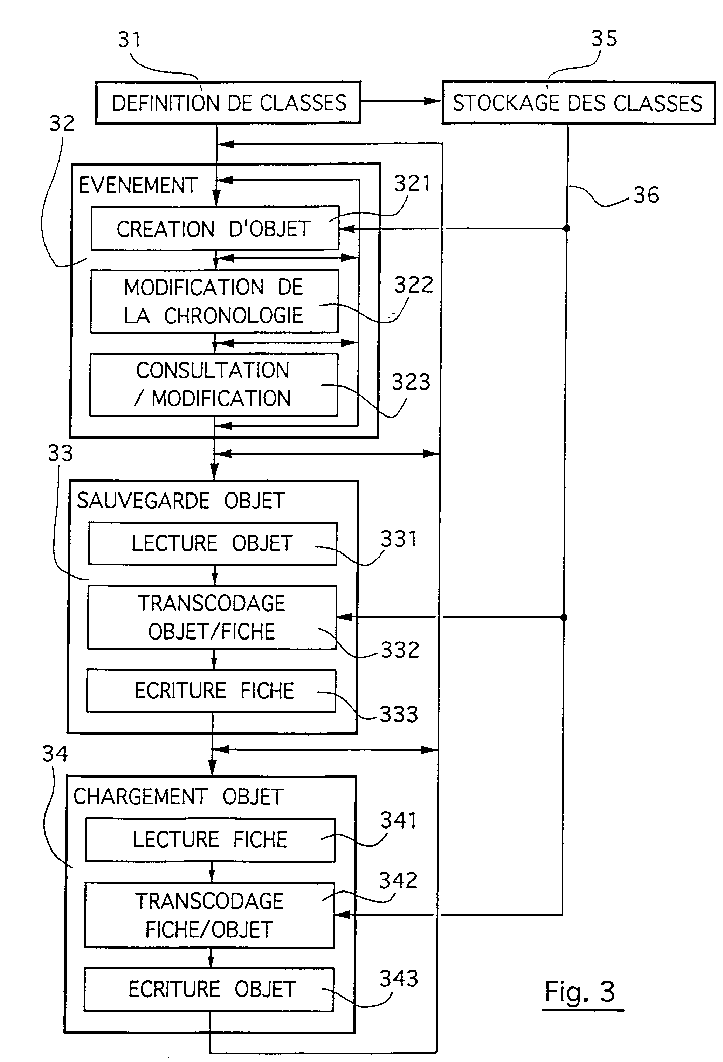

La figure 1 présente de façon schématique le système de l'invention.

La caractéristique essentielle du système de l'invention est de permettre le contrôle d'une base de données relationnelle 11 classique (par exemple au format ORACLE (marque déposée)) sans que l'utilisateur ait un accès direct à celle-ci. Au contraire, l'utilisateur dialogue (12, 13) avec des moyens 14 de contrôle orientés objets. L'utilisateur manipule (c'est-à-dire consulte et/ou modifie), par l'intermédiaire des moyens 14 de contrôle, uniquement des objets qui sont stockés dans des moyens 15 de stockage temporaire.

Ainsi, le système de l'invention gère deux modes de représentation et de stockage tout à fait distinct :
- un mode I reposant sur la représentation par objets, qui est le seul accessible à l'utilisateur;
- un mode II correspondant aux bases de données relationnelles, qui est géré de façon totalement automatique par les moyens 15 de contrôle.

Le lien entre les deux modes est assuré par des moyens 16 de transcodage, qui assurent la réalisation d'une fiche de la base de données 11 à partir d'un objet 18 stocké dans les moyens 15 de stockage temporaire, et réciproquement.

Ce transcodage 16 n'est pas une simple adaptation systématique de format. Au contraire, il tient compte pour chaque objet de la structure 19 de la classe de cet objet. Les classes d'objets 110, définies par les moyens 14 de contrôle, sont stockées dans des moyens 111 de stockage des classes d'objet.

En d'autres termes, les moyens 16 de transcodage fonctionnent sous la contrainte de la définition 19 des classes d'objet.

Les moyens 14 de contrôle mettent en oeuvre une représentation objet de la connaissance basée sur un modèle "Classe-Instance" une classe est constituée d'une liste d'attributs, de comportements (les méthodes) et de structures (les variables). Cette représentation regroupe notamment les fonctions suivantes :
- Héritage : qui permet la réutilisation de la structure et des comportements (code plus compact, maintenance plus aisée) ;
- Spécialisation : permettant de faire évoluer le système de façon cohérente et saine ;
- Encapsulation: cette caractéristique associe un comportement à une structure et aussi de définir des attributs comme publics ou privés ;
- Réflexes : formules des champs déduits, contraintes de saisie.

Les objets manipulés 112 ont une implémentation associée dans la base de données 11. Les moyens 14 de contrôle intègrent un sous-ensemble 113 de contrôle de la base de données, qui se charge de façon automatique de la gestion de la base de données 11. Plus précisément, le sous-ensemble 113 réalise notamment les opérations suivantes :
- génération de commandes 114 selon la logique d'accès (ou le langage de contrôle) de la base de données 11, en fonction des demandes 12 émises par l'utilisateur selon une logique d'accès orientée objets ;
- gestion de verrous, pour empêcher l'accès à des fiches associées à un objet stocké en mémoire temporaire 15 qui a été modifié.

Les objets étant mémorisés, en vu de leur traitement, dans les moyens 15 de stockage temporaire, le nombre de requêtes à la base de données 11 est très réduit, par rapport aux systèmes de gestion de bases de données classiques. En effet, plusieurs opérations peuvent être effectuées sur un objet, alors qu'il n'aura été chargé (via les moyens 16 de transcodage) qu'une seule fois. Dans la pratique, durant une séquence de travail, les objets sont transcodés lorsqu'ils ne sont pas dans les moyens 15 de stockage temporaire, et ne sont re-stockés dans la base de données, sous la forme de leur fiche associée, qu'à la fin de la séquence. De plus, pour simplifier encore le dialogue avec la base de données 11, le sous-ensemble 113 de contrôle gère une mémoire 115 de commandes, qui conservent les dernières commandes générées par le sous-ensemble 113. Ainsi, quand l'utilisateur émet une requête similaire à une requête précédente, le sous-ensemble 113 n'a pas besoin de recréer la commande de la base de données correspondante, mais seulement de reprendre et adapter celle stockée dans la mémoire 115.

Dès qu'un objet a été modifié dans les moyens 15 de stockage temporaire, le sous-ensemble 113 émet de façon automatique une commande de verrouillage interdisant la modification de la fiche correspondante dans la base de données 11. Ainsi, dans le cas par exemple d'une application multi-utilisateur, un second utilisateur pourra consulter cet objet, mais non la modifier.

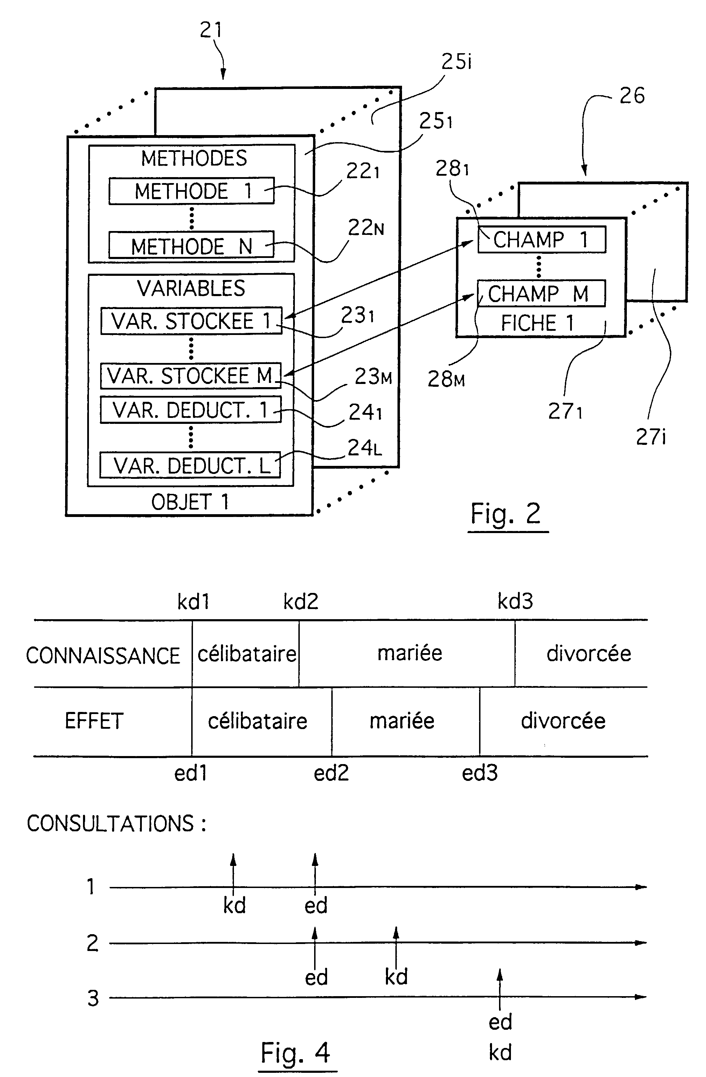

La figure 2 illustre la construction d'une classe d'objets, et ses liens avec la table de la base de données qui lui est associée.

Une classe 21 d'objets peut comprendre les attributs suivants :
- des méthodes 22₁ à 22_{N}, qui définissent un message qui peut être envoyé à l'objet ;
- des variables stockées 23ₗ à 23_{M}, contenant des valeurs représentatives d'un objet ;
- des variables déductives 24₁ à 24_{L}, contenant des valeurs calculées, et non stockées systématiquement, à partir des variables stockées et/ou de valeurs externes (date du traitement par exemple).

A partir de cette classe, une pluralité d'instances 25₁ à 25ᵢ ou objets,peuvent être créées. A chaque classe, ou éventuellement à un groupe de classes, notamment lorsque ces classes ont été créées selon le mécanisme de l'héritage à partir d'une classe-père, on associe une table 26 de la base de données, dans laquelle une fiche 27₁ à 27ᵢ est associée à chaque objet 25₁ à 25ᵢ.

Ces fiches sont très simplifiées, par rapport aux objets. En effet, elles ne comprennent que M champs 28₁ à 28_{M} correspondant aux M variables stockées 23₁ à 23ₙ. On obtient ainsi un gain important dans l'encombrement de la mémoire de la base de données.

On comprend en revanche que les opérations que doivent effectuer les moyens de transcodage sont nombreuses. En effet, lorsqu'ils reçoivent une fiche 17, ils doivent, pour créer l'objet 18 correspondant :
- lire en mémoire de classes 111 la structure de l'objet ;
- lui associer ses méthodes 22₁ à 22_{N} ;
- transcrire les valeurs des variables stockées 23₁ à 23_{M} à partir des champs 28₁ à 28_{M} ;
- déterminer les valeurs des variables déductives 24₁ à 24_{L}.

A titre d'exemple, dans le cas d'un objet correspondant à une personne, il n'est pas nécessaire que la variable "civilité" pouvant prendre les valeurs "Madame", Mademoiselle" ou "Monsieur" soit stockée, car elle peut être déduite des variables stockées "sexe" ("Masculin" ou "Féminin") et "situation de famille" (Célibataire", "Marié", "Divorcé, "Veuf').

Le procédé mis en oeuvre selon l'invention apparaît plus clairement sur l'algorithme simplifié de la figure 3. Il est à noter que ce procédé est présenté sous forme d'étapes successives uniquement dans le but d'en faciliter la compréhension. Il est clair que l'ordre présenté de ces étapes n'est nullement obligatoire, et plus généralement, que certaines étapes peuvent être répétées plusieurs fois et peuvent être effectuées simultanément.

Ce procédé comprend tout d'abord une étape 31 de définition de classes. Cette étape 31 est en général réservée aux développeurs d'application, contrairement aux étapes 32 à 34 décrites par la suite, qui sont accessibles à tout utilisateur du système.

La définition 31 d'une classe comprend la définition par le développeur de la structure de la classe (méthodes et variables). Cette définition peut être faite à partir d'une classe-mère, selon le mécanisme de l'héritage. Lorsque la classe est définie, le fichier correspondant dans la base de données est crée automatiquement, et la structure de la classe est stockée (35) dans la mémoire du système.

Un utilisateur du système travaille sur des événements 32. Un événement est un traitement, qui représente un point d'entrée dans un applicatif et consiste généralement à déclencher des messages sur des objets. Il peut être défini en mode consultation, simulation ou modification, ce qui définit les possibilités de modification des données (et de sauvegarde en base) pendant l'événement.

Pour mieux mettre l'accent sur les caractéristiques de l'invention, les étapes de sauvegarde 33 et de chargement sont représentées indépendamment de l'événement 32. En effet, durant l'événement 32, l'essentiel des opérations sont effectuées sur des objets, indépendamment de la base de données. Toutefois, il est clair que des chargements et des sauvegardes peuvent être effectuées durant un événement, lorsque cela est nécessaire.

Un événement 32 peut donc comprendre les opérations suivantes :
- création 321 d'objets, de façon classique, à partir de la structure 36 de la classe ;
- modification 322 de la chronologie, permettant de situer l'événement à tout instant passé, présent ou futur. Cette technique est décrite plus en détail par la suite, en relation avec la figure 4 ;
- consultation et modification 323 d'objets stockés dans les moyens de stockage temporaire. Cette étape consiste en l'envoi de messages (correspondant aux méthodes) aux objets. Chaque message envoyé à un objet peut déclencher en plus de son effet explicite une propagation de messages sur des objets liés. Il peut ainsi déclencher des réflexes (ou actions) associés à l'événement. Les phénomènes de propagation sont centralisés sur les classe, leur activation complètement transparente.

L'étape 323 met en oeuvre de façon automatique et transparente un mécanisme de gestion des verrous dans la base de données.

Le système est capable de gérer des traitements par lots, il suffit pour cela de lui indiquer très simplement la nature de l'événement. Il pourra alors gérer la mémoire en fonction de ce critère. Les événements interactifs ou par lots ne diffèrent que par le déclenchement et peuvent activer les mêmes messages. Cette structure garantit ainsi une cohérence de fonctionnement entre les événements temps réel et les traitements par lots.

Le système prend en charge l'étape terminale des transaction (annulation, sauvegarde ou validation). La sauvegarde de la transaction permet de reporter à plus tard la validation de cette dernière. Enfin, il est possible de garder une trace des événements exécutés.

L'étape 322 de modification de la chronologie permet de manière naturelle des projections dans le passé (exploitation transparente de l'historique) et dans le futur (simulations sur des hypothèses) ainsi que des opérations de production dans le présent.

Le système gère directement les objets dans le temps. Il peut ainsi retrouver la situation de n'importe quel objet à n'importe quelle date dans le passé ou dans le futur, par l'intermédiaire de simulations. Comme la gestion du temps est intégrée de manière transparente, toute application permet à l'utilisateur de se placer dans le passé ou dans le futur sans qu'il lui soit nécessaire de coder autre chose que les règles d'évolution des valeurs lorsqu'elles sont inconnues.

Le concepteur dispose de tous les moyens pour limiter le nombre d'états d'historiques conservés.

L'archivage des modifications temporelles des objets est particulièrement utile aux applications de gestion.

Selon une caractéristique avantageuse de l'invention, un objet a un début et une fin qui correspondent à deux points dans le temps : on a donc sur tout objet deux champs (non obligatoirement renseignés) début et fin (de type date).

Entre son début et sa fin, l'objet peut connaître différents états : les valeurs de ses champs peuvent évoluer dans le temps. Chaque état est caractérisé par les valeurs des champs : si l'on modifie la valeur d'un champ sur un objet, celui-ci est dans un nouvel état. Ainsi :
- à un instant t de sa vie un objet est dans un certain état ;
- au cours de sa vie un objet connaît un ou plusieurs états.

Le système permet de conserver les différents états d'un objet. Les objets peuvent être gérés en historique.

Lorsque l'on définit (31) une classe d'objets, on précise si les objets de cette classe doivent être ou non gérés en historique : pour les objets gérés en historique, le système conserve en base de données leurs états successifs.

Un état, comme un objet, est caractérisé par des dates de début et de fin.

La gestion du temps se fait en considérant deux types de dates :
- la date de connaissance : c'est la date à laquelle le système prend connaissance de l'information,
- la date d'effet : c'est la date à laquelle l'information est prise en compte par le système.

La création, modification ou suppression d'objets se fait au cours d'un événement, auquel sont obligatoirement associées une date de connaissance et une date d'effet.

Selon que l'on accède en lecture ou en écriture à la base, la signification des dates n'est pas tout à fait la même :
- écriture en base de données : les définitions des dates sont celles données ci-dessus,
- lecture en base de données : on récupère l'information telle qu'elle est connue à la date de connaissance de lecture et telle qu'elle est effective à la date d'effet de lecture.

La distinction entre date d'effet et date de connaissance permet entre autre de gérer les effets rétroactifs (écriture avec date d'effet inférieure à la date de connaissance).

Un état est caractérisé par des dates de début et de fin. Chaque objet comprend donc les champs techniques suivants :
- EDN :: date d'effet début de l'état,
- KDN :: date de connaissance début de l'état
- EDX :: date d'effet fin de l'état
- KDX:: date de connaissance fin de l'état.

Les dates d'effet et de connaissance "fin" d'un état correspondent aux dates d'effet et de connaissance "début" de l'état suivant.

Lorsque l'on consulte un objet géré en historique, on voit le dernier état de l'objet vérifiant :
- date de connaissance de lecture postérieure ou égale à date de connaissance de l'état (EDN), et,
- date d'effet de lecture postérieure ou égale à date d'effet de l'état (KDN),

Pour voir les valeurs, il faut aussi que la date d'effet de lecture soit comprise entre les dates début et fin de l'objet.

La figure 4 illustre un exemple de gestion d'un objet avec historique de la classe "personne" : Melle Mathilde DURAND est connue depuis le 1er février 1990 elle informe le gestionnaire de la base de données de son mariage avec M. DUPOND qui aura lieu le 15 juin 1990. Le 05/06/92, elle l'informe qu'elle a divorcé le 25/04/92.

On a donc :
Date début de l'objet = 1ère date d'effet = 1ère date de connaissance (ED1 et KD1)
Date fin de l'objet = 99/99/9999 (équivalent à l'infini).

L'objet comprend donc trois états :
*ETAT 1 : Melle DURAND n'est pas mariée :
EK1 = date de connaissance début de l'état.
ED1 = date d'effet début de l'état.

Valeurs des variables :
- nom =: DURAND
- prénom =: Mathilde
- civilité =: Mademoiselle
- situation familiale =: célibataire

∗ETAT 2 : Melle DURAND est devenue Mme DUPOND :
EK2 = date de connaissance début de l'état 2 (et fin de l'état 1) = 01/02/1992.
ED2 = date d'effet début de l'état 2 (et fin de l'état 1) = 15/06/1992.

Valeurs des variables :
- nom =: DUPOND
- prénom =: Mathilde
- civilité =: Madame
- situation familiale =: mariée

∗ETAT 3 : Mme DUPOND est divorcée, elle a conservé son nom de mariage.
EK3 = date de connaissance début de l'état 2 (et fin de l'état 1) = 01/02/1992.
ED3 = date d'effet début de l'état 2 (et fin de l'état 1) = 15/06/1992.

Valeurs des variables :
- nom =: DUPOND
- prénom =: Mathilde
- civilité =: Madame
- situation familiale =: divorcée

On donne trois exemples de consultation de l'historique :

Consultation 1:
EK2 > date de connaissance de lecture > EK1
et ED2 > date d'effet de lecture > ED1
on voit l'état 1 de l'objet (Melle DURAND).

Consultation 2 :
date de connaissance de lecture > EK2
mais date d'effet de lecture < ED2
on ne peut pas voir l'état 2 date de connaissance de lecture > EK1 et date d'effet de lecture > ED1
on voit l'état 1 (Melle DURAND).

Consultation 3 :
EK3 > date de connaissance de lecture > EK2
et date d'effet de lecture > ED3>ED2
on voit l'état 2 de l'objet (Mme DUPOND mariée).

La sauvegarde 33 d'un objet stocké dans la mémoire temporaire se fait en général à la fin d'un événement. Elle se décompose en trois étapes, réalisées de façon automatique par les moyens 16 de transcodage :
- lecture 331 de l'objet en sa fiche associée, en tenant compte de la structure 36 de la classe de l'objet ;
- écriture 333 de la fiche transcodée dans la base de données 11.

Le chargement 34 d'un objet dans la mémoire temporaire 16 se fait de façon symétrique. Il comprend donc les étapes de :
- lecture 341 de la fiche associée à l'objet en question, dans la base de données;
- transcodage 342 de la fiche vers l'objet, en fonction de la structure 36 de la classe de l'objet ;
- écriture 343 de l'objet dans les moyens 15 de stockage temporaire.

Le chargement 34 d'un objet peut avoir lieu à tout instant durant un événement. Plus précisément, le sous-ensemble 113 de contrôle de la base de données génère une demande de chargement lorsque cela est nécessaire, c'est-à-dire lorsque l'utilisateur émet une requête 12 concernant un objet qui n'est pas encore dans les moyens 15 de stockage temporaire.

les moyens de contrôle gèrent donc, de façon transparente, une liste des objets présents dans les moyens 15 de stockage temporaire.

Toujours dans l'objectif de réduire le nombre d'accès à la base de données 11, une recherche d'objets sur un certain critère est effectuée en deux temps. Tout d'abord la recherche porte sur les objets stockés dans les moyens 15 de stockage temporaire. Ensuite, et seulement si le résultat de la recherche est négatif, celle-ci se poursuit sur la base de données 11, sous le contrôle du sous-ensemble 113.

## Revendications

1. Système de contrôle d'une base de données relationnelle limitant le nombre des accès à ladite base de données,
ladite base de données étant stockée dans des premiers moyens de stockage (11) contrôlés selon une première logique d'accès relationnelle et comprenant au moins une série de fiches (27ᵢ), chacune desdites fiches comprenant au moins un champ de données (28₁ à 28 _{M}),
système selon lequel chacune desdites fiches (27ᵢ) est associée à un objet (25ᵢ) comprenant au moins une variable (24₁ à 24_{L}) et au moins une méthode (22₁ à 22_{M}) permettant d'agir sur la valeur d'au moins une desdites variables,
ledit système comprenant :
- des seconds moyens (15) de stockage temporaire d'objets ;
- des moyens (14) de contrôle comprenant :
- des moyens de définition de classes d'objets (110), une classe d'objet définissant une structure d'objet, et de création d'instances d'une classe, ou objets, à partir d'une desdites classes d'objets ;
- des moyens de consultation (112) et de modification d'au moins une variable d'au moins un objet stocké dans lesdits seconds moyens (15) de stockage temporaire, selon ladite seconde logique d'accès, en mettant en oeuvre lesdites méthodes ;
- des moyens (113) de génération automatique de commandes destinées à ladite base de données, selon ladite première logique d'accès, à partir de commandes correspondant à ladite seconde logique d'accès ; et
- des moyens (16) de transfert de données entre lesdits premiers (11) et lesdits seconds (15) moyens de stockage et réciproquement, associant à un desdits objets, par transcodage, une fiche de ladite base de données, ladite fiche comprenant au moins un champ correspondant à une variable dudit objet, ledit transcodage étant fonction de la classe de l'objet correspondant,
les transferts de données entre lesdits premiers et lesdits seconds moyens de stockage étant contrôlés par lesdits moyens (113) de génération automatique de commandes de façon à limiter le nombre d'accès auxdits premiers moyens de stockage,
système caractérisé en ce que les consultations et/ou les modifications de données sont effectuées uniquement sur lesdits objets, selon une seconde logique d'accès orientée objet,
et en ce qu'il comprend des moyens de gestion d'un historique d'au moins certains desdits objets, associant à au moins une variable desdits objets deux valeurs distinctes, chacune desdites valeurs étant associées à deux champs techniques, un champ de date de connaissance, représentatif de la date à laquelle la valeur de ladite variable a été connue, et un champ de date d'effet, représentatif de la date à laquelle la valeur de ladite variable est devenue effective.

2. Système selon la revendication 1, caractérisé en ce que lesdits moyens (14) de contrôle comprennent des moyens de gestion de verrous interdisant la modification d'une fiche de ladite base de données, lorsqu'un objet associé à ladite fiche est stocké dans lesdits seconds moyens de stockage et a été modifié par lesdits moyens de consultation et de modification.

3. Système selon l'une quelconque des revendications 1 et 2, caractérisé en ce que lesdits moyens de contrôle gèrent des séquences de travail, appelées événements, et en ce que lesdits moyens de génération automatique de commandes émettent une commande de transfert de données desdits seconds moyens de stockage vers lesdits premiers moyens de stockage uniquement lorsqu'un événement est terminé.

4. Système selon l'une quelconque des revendications 1 à 3, caractérisé en ce que lesdits moyens (113) de génération automatique de commandes comprennent une mémoire-cache stockant une série de commandes préalablement générées.

5. Procédé de contrôle d'une base de données relationnelle limitant le nombre des accès à ladite base de données,
ladite base de données étant stockée dans des premiers moyens (11) de stockage contrôlés selon une première logique d'accès relationnelle et comprenant au moins une série de fiches, chacune desdites fiches comprenant au moins un champ de données,
chacune desdites fiches étant associée à un objet comprenant au moins une variable et au moins une méthode permettant d'agir sur la valeur d'au moins une desdites variables,
ledit procédé comprenant les étapes suivantes :
- définition (31) de classes d'objets, une classe d'objet définissant une structure d'objet ;
- création (321) d'instances d'une classe, ou objets, à partir d'une desdites classes d'objets ;
- chargement (34) d'au moins un objet dans des seconds moyens (11) de stockage temporaire, comprenant les étapes de :
- lecture (341) dans lesdits premiers moyens de stockage d'une fiche correspondant à un desdits objets ;
- premier transcodage (342) de ladite fiche vers ledit objet, en fonction de la structure de la classe dudit objet, au moins certaines variables dudit objet correspondant à au moins certains desdits champs de données de ladite fiche;
- écriture (343) dudit objet dans lesdits seconds moyens de stockage temporaire ;
- consultation et modification (323) d'au moins une variable d'au moins un objet stocké dans lesdits seconds moyens de stockage, selon ladite seconde logique d'accès, en mettant en oeuvre lesdites méthodes ;
- sauvegarde (33) dans lesdits premiers moyens de stockage d'au moins une fiche correspondant à au moins un objet stocké dans lesdits seconds moyens de stockage, comprenant pour chaque fiche les étapes de :
- lecture (331) dans lesdits seconds moyens de stockage de l'objet correspondant à ladite fiche ;
- second transcodage (332) dudit objet vers ladite fiche, en fonction de la structure de la classe dudit objet, au moins certaines variables dudit objet correspondant à au moins certains desdits champs de données de ladite fiche;
- écriture (333) de ladite fiche dans lesdits premiers moyens de stockage, les commandes destinées à ladite base de données, correspondant à ladite première logique d'accès, étant générées de façon automatique à partir de commandes correspondant à ladite seconde logique d'accès émises par un opérateur,
procédé caractérisé en ce que des consultations et/ou des modifications de données sont effectuées uniquement sur lesdits objets, selon une seconde logique d'accès orientée objet,
et en ce qu'il comprend une étape (322) de gestion d'un historique d'au moins certains desdits objets, associant à au moins une variable desdits objets au moins deux valeurs distinctes, chacune desdites valeurs étant associée à deux champs techniques, un champ de date de connaissance, représentatif de la date à laquelle ladite valeur a été connue, et un champ de date d'effet, représentatif de la date à laquelle ladite valeur est devenue effective.

6. Procédé selon la revendication 5, caractérisé en ce qu'il gère des séquences de travail, appelées événements, un événement comprenant au moins deux étapes de chargement et/ou au moins deux étapes de consultation et/ou de modification et se terminant par une unique étape de sauvegarde.

7. Procédé selon l'une quelconque des revendications 5 et 6, caractérisé en ce qu'il comprend une étape de contrôle de l'accès aux fiches de ladite base de données, interdisant par verrouillage la modification d'une fiche de ladite base de données, lorsqu'un objet associé à ladite fiche est stocké dans lesdits seconds moyens de stockage et a été modifié.

8. Procédé selon l'une quelconque des revendications 5 à 7, caractérisé en ce qu'il comprend une étape de génération automatique de commandes selon ladite première logique d'accès, incluant la gestion d'une mémoire-cache stockant une série de commandes préalablement générées.

9. Procédé selon l'une quelconque des revendications 5 à 8, caractérisé en ce qu'au moins certains desdits objets comprennent :
- au moins une variable stockée, correspondant à un champ de données de la fiche associée audit objet ; et
- au moins une variable déductive, dont la valeur est déterminée lors de ladite première étape de transcodage, à partir de la valeur d'au moins un champ de données de la fiche associée audit objet et/ou de la structure de la classe dudit objet.

10. Procédé selon l'une quelconque des revendications 5 à 9, caractérisé en ce qu'une recherche d'au moins un objet répondant à une condition prédéterminée est effectuée en deux temps :
- un premier temps correspondant à une recherche parmi les objets stockés dans lesdits seconds moyens de stockage ; et
- si la recherche n'est pas terminée, un second temps correspondant à une recherche parmi les fiches stockées dans lesdits premiers moyens de stockage.

## Claims

1. Control system for a relational database, limiting the number of accesses to the said database, the said database being stored in first storage means (11) controlled using a first relational access logic and comprising at least one series of files (27ᵢ), each of the said files comprising at least one data field (28₁ to 28_{M}),
according to which system each of the said files (27ᵢ) is associated with an object (25ᵢ) comprising at least one variable (24₁ to 24_{L}) and at least one method (22₁ to 22_{M}) making it possible to act on the value of at least one of the said variables,
the said system comprising:
- second means (15) for temporary storage of objects;
- control means (14) comprising:
- means (110) for defining object classes, an object class defining an object structure, and for creating instances of a class, or objects, on the basis of one of the said object classes;
- means (112) for querying and modifying at least one variable of at least one object stored in the said second, temporary storage means (15), according to the said second access logic, by employing the said methods;
- means (113) for automatically generating commands intended for the said database, according to the said first access logic, on the basis of commands corresponding to the said second access logic; and
- means (16) for transferring data between the said first (11) and the said second (15) storage means, and vice versa, associating a file of the said database with one of the said objects by code conversion, the said file comprising at least one field corresponding to a variable of the said object, the said code conversion being dependent on the class of the corresponding object,
the transfers of data between the said first and the said second storage means being controlled by the said means (113) for automatically generating commands, so as to limit the number of accesses to the said first storage means,
which system is characterized in that the queries and/or modifications of data are carried out solely on the said objects, according to a second, object-oriented access logic,
and in that it comprises means for managing a history of at least some of the said objects, associating two separate values with at least one variable of the said objects, each of the said values being associated with two technical fields, a date-of-knowledge field, representing the date on which the value of the said variable became known, and a date-of-effect field, representing the date on which the value of the said variable became effective.

2. System according to Claim 1, characterized in that the said control means (14) comprise means for managing locks preventing the modification of a file of the said database, when an object associated with the said file is stored in the said second storage means and has been modified by the said query and modification means.

3. System according to either one of Claims 1 and 2, characterized in that the said control means manage work sequences, referred to as events, and in that the said means for automatically generating commands emit a command for transfer of data from the said second storage means to the said first storage means solely when an event is finished.

4. System according to any one of Claims 1 to 3, characterized in that the said means (113) for automatically generating commands comprise a cache memory storing a series of commands generated beforehand.

5. Control system for a relational database, limiting the number of accesses to the said database,
the said database being stored in first storage means (11) controlled using a first relational access logic and comprising at least one series of files, each of the said files comprising at least one data field,
each of the said files being associated with an object comprising at least one variable and at least one method making it possible to act on the value of at least one of the said variables,
the said method comprising the following steps:
- definition (31) of object classes, an object class defining an object structure;
- creation (321) of instances of a class, or objects, on the basis of one of the said object classes;
- loading (34) of at least one object in second, temporary storage means (11), comprising the steps cf:
- reading (341) from the said first storage means a file corresponding to one of the said objects;
- first code conversion (342) of the said file to the said object, depending on the structure of the class of the said object, at least some variables of the said object corresponding to at least some of the said data fields of the said file;
- writing (343) the said object into the said second, temporary storage means;
- querying and modifying (323) at least one variable of at least one object stored in the said second storage means, according to the said second access logic, by employing the said methods;
- saving (33) in the said first storage means at least one file corresponding to at least one object stored in the said second storage means, comprising for each file the steps of:
- reading (331) from the said second storage means the object corresponding to the said file;
- second code conversion (332) of the said object to the said file, depending on the structure of the class of the said object, at least some variables of the said object corresponding to at least some of the said data fields of the said file;
- writing (333) the said file into the said first storage means,
the commands intended for the said database, corresponding to the said first access logic, being generated automatically on the basis of commands, corresponding to the said second access logic, which originate from an operator,
which method is characterized in that the queries and/or modifications of data are carried out solely on the said objects, according to a second, object-oriented access logic,
and in that it comprises a step (322) for managing a history of at least some of the said objects, associating at least two separate values with at least one variable of the said objects, each of the said values being associated with two technical fields, a date-of-knowledge field, representing the date on which the said value became known, and a date-of-effect field, representing the date on which the said value became effective.

6. Method according to Claim 5, characterized in that it manages work sequences, referred to as events, an event comprising at least two steps of loading and/or at least two steps of querying and/or modification, and ending in a single save step.

7. Method according to either one of Claims 5 and 6, characterized in that it comprises a step of controlling access to the files of the said database, using locking to prevent modification of a file of the said database when an object associated with the said file is stored in the said second storage means and has been modified.

8. Method according to any one of Claims 5 to 7, characterized in that it comprises a step of automatically generating commands according to the said first access logic, including the management of a cache memory storing a series of commands generated beforehand.

9. Method according to any one of Claims 5 to 8, characterized in that at least some of the said objects comprise:
- at least one stored variable, corresponding to a data field of the file associated with the said object; and
- at least one deductive variable, the value of which is determined during the said first code conversion step, on the basis of the value of at least one data field of the file associated with the said object and/or the structure of the class of the said object.

10. Method according to any one of Claims 5 to 9, characterized in that a search for at least one object meeting a predetermined condition is carried out in two stages:
- a first stage corresponding to a search among the objects stored in the said second storage means; and
- if the search is not completed, a second stage corresponding to a search among the files stored in the said first storage means.

## Patentansprüche

1. Steuersystem einer relationalen Datenbank, welches die Zahl der Zugriffe auf die Datenbank verringert,
wobei die Datenbank in ersten Speichermitteln (11) gespeichert wird, die gemäß einer ersten relationalen Zugriffslogik gesteuert werden, und wobei die Datenbank mindestens eine Reihe von Datensätzen (27ᵢ) umfaßt, die mindestens ein Datenfeld (28₁ bis 28_{M}) enthalten,
wobei in diesem System jeder Datensatz (27ᵢ) mit einem Objekt (25ᵢ) verknüpft ist, das mindestens eine Variable (24₁ bis 24_{L}) und mindesten eine Methode (22₁ bis 22_{M}) umfaßt, welche es erlaubt, auf mindestens einen Wert dieser Variablen einzuwirken,
wobei das System folgendes umfaßt:
- zweite Speichermittel (15) für das zeitlich begrenzte Speichern von Objekten;
- Steuerungsmittel (14), die folgendes umfassen:
- Mittel zum Definieren von Objektklassen (110), wobei eine Objektklasse eine Objektstruktur definiert sowie Mittel zum Erzeugen von Instanzen einer Klasse oder von Objekten, ausgehend von einer dieser Objektklassen;
- Mittel zur Abfrage (112) und Änderung von mindestens einer Variablen von mindestens einem Objekt, das in den zweiten zeitlich begrenzten Speichermitteln (15) gespeichert ist, gemäß der zweiten Zugriffslogik, durch Anwendung dieser Methoden;
- Mittel (113) zur automatischen Erzeugung von an die Datenbank gerichteten Befehlen, gemäß der ersten Zugriffslogik, ausgehend von Befehlen, die der zweiten Zugriffslogik entsprechen, und
- Datenübertragungsmittel (16) zwischen den ersten (11) und zweiten (15) Speichermitteln und umgekehrt, wodurch eines der Objekte durch Transkodieren mit einem Datensatz der Datenbank verknüpft wird, wobei der Datensatz mindestens ein Feld umfaßt, welches einer Variablen des Objektes entspricht, wobei die Transkodierung eine Funktion der Klasse des entsprechenden Objektes ist;
wobei die Datenübertragungen zwischen den ersten und zweiten Speichermitteln von den Mitteln (113) zur automatischen Erzeugung von Befehlen gesteuert werden, um die Zahl der Zugriffe auf die ersten Speichermittel zu beschränken,
dadurch gekennzeichnet, daß die Abfragen und/oder die Datenveränderungen nur über diese Objekte erfolgen, und zwar über eine zweite objektorientierte Zugriffslogik,
und daß es über Mittel zum Verwalten eines Stammwertes von mindestens einigen dieser Objekte verfügt, wobei mindestens eine Variable der Objekte mit zwei verschiedenen Werten verknüpft wird, wobei jeder dieser Werte mit zwei technischen Feldern verknüpft ist, ein Feld für das Erkenntnisdatum, welches für das Datum, an dem der Wert dieser Variablen bekannt wurde, repräsentativ ist, und ein Feld für das Wirksamkeits-Datum, welches für das Datum, an dem der Wert dieser Variablen wirksam wurde, repräsentativ ist.

2. System gemäß Anspruch 1,
dadurch gekennzeichnet, daß die Steuerungsmittel (14) Mittel zum Verwalten von Sperren umfassen, welche die Änderung eines Datensatzes der Datenbank untersagen, wenn ein mit dem Datensatz verknüpftes Objekt in den zweiten Speichermitteln gespeichert wird und von den Abfrage- und Änderungsmitteln verändert wurde.

3. System gemäß einem der Ansprüche 1 und 2,
dadurch gekennzeichnet, daß die Steuerungsmittel Arbeitsabläufe verwalten, die Ereignisse genannt werden und dadurch, daß die Mittel zum automatischen Erzeugen von Befehlen einen Übertragungsbefehl für Daten von den zweiten Speichermitteln zu den ersten Speichermitteln nur dann herausgeben, wenn ein Ereignis beendet ist.

4. System gemäß einem der Ansprüche 1 bis 3,
dadurch gekennzeichnet, daß die Mittel (113) zum automatischen Erzeugen von Befehlen einen Cache-Speicher umfassen, der eine Reihe vorher erzeugter Befehle speichert.

5. Steuerungsverfahren einer relationalen Datenbank, welches die Zahl der Zugriffe auf die Datenbank verringert,
wobei die Datenbank in ersten Speichermitteln (11) gespeichert ist, die nach einer ersten relationalen Zugriffslogik gesteuert werden und wobei die Datenbank mindestens eine Reihe von Datensätzen umfaßt, die mindestens ein Datenfeld enthalten,
wobei jeder dieser Datensätze mit einem Objekt verknüpft ist, das mindestens eine Variable und mindestens eine Methode umfaßt, welche das Einwirken auf den Wert von mindestens einer der Variablen ermöglicht,
wobei das Verfahren die folgenden Schritte umfaßt:
- Definition (31) von Objektklassen, wobei eine Objektklasse eine Objektstruktur definiert;
- Erzeugung (321) von Instanzen einer Klasse, oder Objekten, ausgehend von einer dieser Objektklassen;
- Laden (34) von mindestens einem Objekt in zweite zeitlich begrenzte Speichermittel (11), was die folgenden Schritte umfaßt:
- Lesen (341) eines einem dieser Objekte entsprechenden Datensatzes aus den ersten Speichermitteln;
- erste Transkodierung (342) des Datensatzes in Richtung auf das Objekt, als Funktion der Struktur der Klasse dieses Objektes, wobei mindestens einige Variablen des Objektes mindestens einigen der Datenfeldern des Datensatzes entsprechen;
- Schreiben (343) des Objektes in die zweiten, zeitlich begrenzten Speichermittel;
- Abfrage und Änderung (323) von mindestens einer Variablen von mindestens einem in den zweiten Speichermitteln gespeicherten Objekt, gemäß der zweiten Zugriffslogik, wobei die angegebenen Methoden angewandt werden;
- Sicherung (33) von mindestens einem Datensatz in den ersten Speichermitteln, der mindestens einem in den zweiten Speichermitteln gespeicherten Objekt entspricht, wobei jedes Objekt für jeden Datensatz die folgenden Schritte umfaßt:
- Lesen (331) des dem Datensatz entsprechenden Objektes aus den zweiten Speichermitteln;
- zweite Transkodierung (332) dieses Objektes in Richtung auf den Datensatz, als Funktion der Klassenstruktur dieses Objektes, wobei mindestens einige Variablen dieses Objektes mindestens einigen der Datenfelder dieses Datensatzes entsprechen;
- Schreiben (333) des Datensatzes in die ersten Speichermittel, wobei die Befehle, die der Datenbank zukommen sollen und der ersten Zugriffslogik entsprechen, automatisch erzeugt werden, ausgehend von Befehlen, die der zweiten, von einem Anwender herausgegebenen Zugriffslogik, entsprechen,
dadurch gekennzeichnet, daß Datenabfragen und/oder -änderungen ausschließlich an diesen Objekten erfolgen, und zwar gemäß einer zweiten objektorientierten Zugriffslogik,
und daß es einen Schritt (322) zum Steuern eines Stammwertes von mindestens einigen dieser Objekte umfaßt, wobei mindestens eine Variable dieser Objekte mit mindestens zwei verschiedenen Werten verknüpft wird, wobei jeder dieser Werte mit zwei technischen Feldern verknüpft ist, ein Feld für das Erkenntnisdatum, welches für das Datum, an dem der Wert dieser Variablen bekannt wurde, repräsentativ ist, und ein Feld für das Wirksamkeits-Datum, welches für das Datum, an dem der Wert dieser Variablen wirksam wurde, repräsentativ ist.

6. Verfahren gemäß Anspruch 5,
dadurch gekennzeichnet, daß es Arbeitsabläufe verwaltet, welche Ereignisse genannt werden, wobei ein Ereignis mindestens zwei Lade- und/oder mindestens zwei Abfrage- und/oder Änderungsschritte umfaßt, welche mit einem einzigen Sicherungsschritt enden.

7. Verfahren gemäß einem der Ansprüche 5 oder 6,
dadurch gekennzeichnet, daß es einen Schritt zum Steuern des Zugriffs auf die Datensätze der Datenbank umfaßt, welcher das Ändern eines Datensatzes der Datenbank durch Sperren verhindert, wenn ein mit dem Datensatz verknüpftes Objekt in den zweiten Speichermitteln gespeichert und geändert wurde.

8. Verfahren gemäß einem der Ansprüche 5 bis 7,
dadurch gekennzeichnet, daß es einen Schritt zur automatischen Erzeugung von Befehlen gemäß der ersten Zugriffslogik umfaßt, wobei dieser Schritt die Verwaltung eines Cache-Speichers umfaßt, der eine Reihe vorher erzeugter Befehle speichert.

9. Verfahren gemäß einem der Ansprüche 5 bis 8,
dadurch gekennzeichnet, daß mindestens einige der Objekte folgendes umfassen:
- mindestens eine gespeicherte Variable, die einem Datenfeld des mit dem Objekt verknüpften Datensatz entspricht und
- mindestens eine deduktive Variable, deren Wert beim ersten Transkodierungsschritt festgelegt wird, ausgehend vom Wert von mindestens einem Datenfeld des mit dem Objekt verknüpften Datensatz und/oder von der Klassenstruktur des Objektes.

10. Verfahren gemäß einem der Ansprüche 5 bis 9,
dadurch gekennzeichnet, daß die Suche nach mindestens einem Objekt, welches einer vorgegebenen Bedingung entspricht, in zwei Schritten erfolgt:
- ein erster Schritt, der dem Suchen unter denen in den zweiten Speichermitteln gespeicherten Objekten entspricht, und
- wenn der Suchvorgang nicht abgeschlossen wird, ein zweiter Schritt, der dem Suchen unter denen in den ersten Speichermitteln gespeicherten Datensätzen entspricht.
